# EUROPÄISCHE PATENTANMELDUNG

(11) **EP 2 000 357 A1**
(43) Veröffentlichungstag der Anmeldung: **10.12.2008**
(21) Anmeldenummer: 08009903.9
(22) Anmeldetag: 30.05.2008
(51) Int. Cl.: B60Q 11/00, H05B 33/08

(54) **Anhängeranschlussgerät**

(30) Priorität: 01.06.2007 DE 202007007775 U
(71) Anmelder: ConWys AG, 6023 Rothenburg (CH)
(72) Erfinder: Wystron, Alexander, 6005, Luzern (CH)
(74) Vertreter: Stenger, Watzke & Ring

(57) **Zusammenfassung**

Die vorliegende Erfindung betrifft ein Anhängeranschlußgerät für einen Fahrzeugzug mit einem Zugfahrzeug und einem Anhänger. Ferner betrifft die Erfindung ein Verfahren zum Überwachen einer Leuchtdiode eines Anhängers. Um ein gattungsgemäßes Anhängeranschlußgerät für die Ansteuerung von Leuchtdioden zu ertüchtigen, wird mit der Erfindung ein gattungsgemäßes Anhängeranschlußgerät vorgeschlagen, mit einem für eine Ansteuerung einer Leuchtdiode des Anhängers geeigneten Halbleiterschalter, der mittels einer Steuereinrichtung schaltbar ist, wobei die Steuereinrichtung mit einem steuereinrichtungenverbindenden Datennetz des Zugfahrzeugs in kommunikationstechnischer Verbindung steht, wobei dem Halbleiterschalter ein resistives Element elektrisch parallelgeschaltet ist.

## Beschreibung

Die vorliegende Erfindung betrifft ein Anhängeranschlußgerät für einen Fahrzeugzug mit einem Zugfahrzeug und einem Anhänger. Ferner betrifft die Erfindung ein Verfahren zum Überwachen einer Leuchtdiode eines Anhängers.

Fahrzeuge für den Straßenverkehr bestehen teilweise aus einem Fahrzeugzug, der ein Zugfahrzeug sowie einen oder mehrere Anhänger aufweist. Zugfahrzeuge können beispielsweise Personenkraftwagen, Lastkraftwagen oder dergleichen sein. Anhänger im Sinne der Erfindung sind Fahrzeuge, die während eines Fahrzustands nicht aktiv angetrieben sondern gezogen werden. Sie können demnach auch in Schlepp genommene Fahrzeuge umfassen, die einen eigenen Antrieb aufweisen. Darüber hinaus sind Anhänger beispielsweise solche mit einer eigenen Deichsel oder auch Auflieger, insbesondere Fahrradauflieger, oder dergleichen. Diese können über Kupplungsmittel mit dem Zugfahrzug gekoppelt werden, um einen Fahrzeugzug zu bilden. Gesetzlich vorgeschrieben ist unter anderem eine ordnungsgemäße Beleuchtung des Anhängers, was beispielsweise einen bestimmungsgemäßen Betrieb von Rücklichtern, Blinklichtern, Bremslichtern und dergleichen umfaßt. Bislang sind die Anhänger hierfür mit Glühfadenlampen versehen, die die entsprechenden Beleuchtungen ermöglichen. Zum Betrieb dieser Lampen ist oftmals ein Anhängeranschlußgerät vorgesehen, welches die Lampen vorgabegemäß durch ein Signal des Zugfahrzeugs ansteuert. Das Anhängeranschlußgerät kann beispielsweise im Zugfahrzeug oder auch im Anhänger selbst angeordnet sein. Häufig ist dieses Anhängeranschlußgerät jedoch im Zugfahrzeug angeordnet, wobei dessen anhängerseitigen Anschlüsse zunächst auf eine Steckkupplung einer Steckverbindung geführt sind, die mit einem entsprechenden Gegenelement der Steckverbindung, nämlich einem Stecker, koppelbar ist.

Die bekannten Anhängeranschlußgeräte liefern eine Vielzahl von Möglichkeiten zur Sicherstellung eines ordnungsgemäßen Betriebs der Anhängerglühfadenlampen, um beispielsweise Defekte und Störungen erkennen und melden zu können. Bekannte Verfahren zum Überwachen der Glühfadenlampen nutzen beispielsweise den Stromverbrauch im eingeschalteten Zustand oder den Stromverbrauch eines Spannungsimpulses im ausgeschalteten Zustand. Auf diese Weise kann die Glühfadenlampe sowohl im eingeschalteten als auch im ausgeschalteten Zustand überwacht werden.

Es besteht ein Bedarf, die Leuchten von Anhängern statt mit Glühfadenlampen mit Leuchtdioden auszurüsten. Diese können beispielsweise durch einzelne Leuchtdioden, Leuchtdioden-Anordnungen (Arrays), die aus einer Zusammenschaltung von mehreren einzelnen Leuchtdioden bestehen, sowie auch durch andere lichtemittierende Halbleiter wie SLD's oder dergleichen gebildet sein. Bei Verwendung von Leuchtdioden bei Anhängerleuchten besteht nunmehr das Problem, daß vorhandene Anhängeranschlußgeräte zu deren Ansteuerung ungeeignet sind. Dies resultiert zum einen aus unterschiedlichen Anforderungen hinsichtlich der Betriebsspannung sowie auch unterschiedlichen Anforderungen hinsichtlich des Stromverbrauchs. In der Regel verbrauchen lichtemittierende Halbleiter wie Leuchtdioden erheblich weniger elektrische Energie als vergleichbar leuchtstarke Glühfadenlampen. Aus diesem Grund können die in den bisherigen Anhängeranschlußgeräten vorhandenen Überwachungseinrichtungen nicht zum Einsatz kommen. Zwar kann durch Spannungsanpassung die Anforderung hinsichtlich Spannungsversorgung erreicht werden, jedoch erfordert das unterschiedliche physikalische Verhalten dieser Leuchtmittel ein gänzlich anderes Überwachungskonzept.

Der Erfindung liegt deshalb die Aufgabe zugrunde, ein gattungsgemäßes Anhängeranschlußgerät für die Ansteuerung von Leuchtdioden zu ertüchtigen.

Als Lösung wird mit der Erfindung ein gattungsgemäßes Anhängeranschlußgerät vorgeschlagen, mit einem für eine Ansteuerung einer Leuchtdiode des Anhängers geeigneten Halbleiterschalter, der mittels einer Steuereinrichtung schaltbar ist, wobei die Steuereinrichtung mit einem steuereinrichtungenverbindenden Datennetz des Zugfahrzeugs in kommunikationstechnischer Verbindung steht, wobei dem Halbleiterschalter ein resistives Element elektrisch parallelgeschaltet ist.

Mit dem Halbleiterschalter kann die Leuchtdiode in bekannter Weise ein- beziehungsweise ausgeschaltet werden. Dazu wird der Halbleiterschalter von der Steuereinrichtung entsprechend angesteuert. Diese erhält Steuerbefehle über das Datennetz des Zugfahrzeuges beziehungsweise des Anhängers, welches vorliegend als BUS, insbesondere als CAN-BUS ausgebildet sein kann. Der Halbleiterschalter kann beispielsweise ein Transistor, insbesondere ein bipolarer Transistor, ein Feldeffekttransistor, insbesondere ein MOSFET, ein Thyristor, ein GTO oder dergleichen sein. Zur Überwachung des eingeschalteten Zustands kann beispielsweise eine Strommeßeinheit verwendet werden, mit der ein Strom vom Halbleiterschalter zur Leuchtdiode erfaßt werden kann. Auf diese Weise kann der eingeschaltete Zustand der Leuchtdiode überwacht werden. Wird beispielsweise eine Leuchtdioden-Anordnung verwendet, kann ein Ausfall einzelner Leuchtdioden durch eine Änderung des Stroms erfaßt werden. Mit dem resistiven Element wird nunmehr parallel zum Halbleiterschalter ein geringer Strom in die Leuchtdiode eingespeist. Der Strom ist bezüglich seines Wertes derart gewählt, daß die Leuchtdiode im wesentlichen keine Leuchtwirkung nach außen aufgrund dieses Stroms aufzeigt. Hierdurch kann erreicht werden, daß die Leuchtdiode auch im ausgeschalteten Zustand überwacht werden kann. Liegt nämlich ein Fehler dahingehend vor, daß beispielsweise die elektrische Verbindung zwischen Anhängeranschlußgerät und Leuchtdiode unterbrochen ist, würde der Strom nicht mehr fließen können, was mittels der Strommeßeinheit erfaßt werden kann. Das resistive Element kann natürlich auch mit einem Bezugspotential verbunden sein. Vorzugsweise ist das resistive Bauelement ein zweipoliges elektronisches Bauelement wie ein Widerstand, ein NTC oder dergleichen. Ferner kann das resistive Bauelement durch eine Zusammenschaltung von zwei oder mehreren elektronischen Bauelementen gebildet sein. Es können auch Dioden, Zenerdioden oder dergleichen zum Einsatz kommen.

Gemäß einer Ausgestaltung ist das resistive Element einstellbar. Das hat den Vorteil, daß das Anhängeranschlußgerät an unterschiedliche Parameter von unterschiedlichen Leuchtdioden angepaßt werden kann, ohne daß die Schaltung geändert werden muß. Dies ist insbesondere dann von Vorteil, wenn die Halbleiterschalter zusammen mit dem resistiven Element hoch integriert in einer elektronischen Schaltung angeordnet sind, so daß Bauelemente nicht ohne weiteres gewechselt werden können.

Nach einem weiteren Vorschlag weist das resistive Element einen elektrischen Widerstand und/oder eine Stromquelleneinheit auf. Eine besonders einfache Ausgestaltung ist dabei durch den elektrischen Widerstand gebildet. Hierbei handelt es sich um ein zweipoliges Bauelement, bei dem durch geeignete Wahl des elektrischen Widerstands bei vorgegebener Spannung der Meßstrom eingestellt werden kann. Darüber hinaus kann eine Stromquelleneinheit vorgesehen sein, die sich dadurch auszeichnet, daß der in die Leuchtdiode eingespeiste Strom möglichst konstant ist. Dies erlaubt es, eine hochgenaue Messung durchzuführen. Besonders vorteilhaft ist die Stromquelleneinheit temperaturstabilisiert, so daß auch über einem weiteren Anwendungsbereich gleichmäßige Meßbedingungen erzeugt werden können. Besonders vorteilhaft erweist sich dabei, wenn die Stromquelleneinheit eine Stromspiegeleinheit aufweist. Mit der Stromspiegeleinheit kann die Genauigkeit der Meßwertfassung verbessert werden.

Nach einer weiteren Ausgestaltung wird vorgeschlagen, daß der Halbleiterschalter unipolar ausgebildet ist. Im Sinne der Erfindung meint unipolar, daß der Schalter lediglich geeignet ist, eine einzige Schaltverbindung in Form eines Einschalters oder eines Ausschalters herzustellen. Er fügt demnach lediglich über eine einzige Schaltstrecke und kann je nach Schaltungsanordnung die Leuchtdiode entweder mit positiver oder negativer Spannung beaufschlagen. Dies ermöglicht es, eine besonders einfache Anordnung für den Halbleiterschalter zu erreichen.

Darüber hinaus wird vorgeschlagen, daß der Halbleiterschalter überlastfest ausgebildet ist. Überlastfest im Sinne der Erfindung bedeutet, daß der Halbleiterschalter nicht nur gegen Beanspruchung wegen Überstrom, insbesondere Kurzschluß, geschützt ist, sondern auch daß er gegen Übertemperatur geschützt ist. Vorzugsweise ist eine Sensorschaltung vorgesehen, die die Temperatur des Halbleiterschalters erfaßt und bei Erreichen eines vorgebbaren Temperaturschwellwertes den Halbleiterschalter deaktiviert. Vorzugsweise erfolgt dann eine Meldung im Zugfahrzeug über eine Störung des Anhängeranschlußgeräts. Der Halbleiterschalter kann dazu beispielsweise Gegenkopplungsmittel aufweisen, mit denen die Belastung des Halbleiterschalters mit zunehmender Überlastung zurückgefahren wird. Natürlich kann auch vorgesehen sein, daß bei Erreichen einer Überlastschwelle der Halbleiterschalter permanent ausgeschaltet wird.

Insbesondere wird vorgeschlagen, daß der Halbleiterschalter durch einen Transistor gebildet ist. Dieser kann beispielsweise durch einen bipolaren Transistor gebildet sein, der an seinem Emitteranschluß mit einem Gegenkopplungswiderstand verbunden ist. Natürlich kommt auch ein Feldeffekttransistor, insbesondere ein MOSFET, in Frage, dessen Durchlaßwiderstand zugleich zur Erfassung des Stromes und der Temperatur verwendet werden kann. Eine besonders einfache Realisierung der Überlastfestigkeit kann erreicht werden.

Gemäß einem weiteren Vorschlag weist das Gerät eine Detektoreinheit auf. Mit der Detektoreinheit kann aufgrund eines Meßwerts ein Zustandssignal erzeugt werden, welches den Funktionszustand der Leuchtdiode angibt. So kann mit der Detektoreinheit beispielsweise erfaßt werden, ob die Spannung an der Leuchtdiode im ausgeschalteten Zustand einen vorgebbaren Grenzwert unterschreitet. Wird der Grenzwert überschritten, kann dies ein Anzeichen für eine fehlerhafte, elektrische Verbindung zwischen Halbleiterschalter und Leuchtdiode oder auch für einen Defekt der Leuchtdiode darstellen. Die Bedienungsfreundlichkeit kann weiter verbessert werden.

Darüber hinaus wird vorgeschlagen, daß die Detektoreinheit eine Komparatoreinheit aufweist. Mit der Komparatoreinheit kann der durch die Detektoreinheit erfaßte Wert mit einem vorgebbaren Schwellwert verglichen werden. Wird der Schwellwert überbeziehungsweise unterschritten erfolgt eine entsprechende Meldung. Um die Komparatoreinheit an die unterschiedlichen Leuchtdiodentypen anpassen zu können, kann vorgesehen sein, daß der Schwellwert einstellbar ist.

Darüber hinaus kann vorgesehen sein, daß die Detektoreinheit eine Steuereinheit aufweist. Dies ermöglicht es, den Schwellwert automatisch an die erforderlichen Betriebsparameter der verwendeten Leuchtdiode anzupassen.

Das Anhängeranschlußgerät kann ferner einen Kommunikationsanschluß aufweisen, mittels dem das Anhängeranschlußgerät beispielsweise programmierbar ist. Es können Einstellungsparameter eingegeben, geändert und/oder gelöscht werden. Natürlich können auch Daten des Anhängeranschlußgeräts abgefragt werden.

Weiterhin kann das Anhängeranschlußgerät einen Energieversorgungsanschluß aufweisen. Dieser kann ein Potential eines fahrzeugseitigen Bordnetzes aufweisen. Der Energieversorgungsanschluß kann beispielsweise ein Masseanschluß, ein Versorgungsspannungsanschluß, ein weiterer Bezugspotentialanschluß oder dergleichen sein. Vorzugsweise sind sowohl die Zugfahrzeugmasse als auch eine positive Bordnetzspannung am Anhängeranschlußgerät angeschlossen.

In einer weiteren Ausgestaltung wird vorgeschlagen, daß ein Energieversorgungsanschluß für das Anhängeranschlußgerät und ein Kommunikationsanschluß zur Herstellung der Kommunikationsverbindung einstückig ausgebildet sind. Dies ermöglicht es, die Anzahl der verwendeten Leitungen zu reduzieren. So kann beispielsweise vorgesehen sein, daß auf der Energieversorgungsleitung mittels Trägerfrequenz oder dergleichen ein Kommunikationskanal bereitgestellt wird.

Mit der Erfindung wird ferner ein Verfahren zum Überwachen einer Leuchtdiode eines Anhängers vorgeschlagen, wobei die Leuchtdiode mit einem Anhängeranschlußgerät in elektrischer Verbindung steht und mittels eines Halbleiterschalters ein- und/oder ausgeschaltet wird, der von einer mit einem fahrzeugseitigen BUS in Kommunikationsverbindung stehenden Steuerung gesteuert wird, wobei in die Leuchtdiode zusätzlich ein Strom eingespeist wird.

Die zusätzliche Stromeinspeisung in die Leuchtdiode - welche Stromeinspeisung auch abschaltbar ausgebildet sein kann - ermöglicht es, deren Funktionszustand auch im ausgeschalteten Zustand zu bestimmen. Der Strom ist dabei derart bemessen, daß er im wesentlichen zu keiner sichtbaren Leuchtwirkung der Leuchtdiode führt. Die Höhe des Stromwertes kann beispielsweise durch wenige Versuche oder auch anhand von Kennliniendaten der Leuchtdiode ermittelt werden. Ein hinreichend kleiner Strom bedeutet keine wesentliche zusätzliche Belastung des Bordnetzes des Fahrzeugzugs.

Gemäß einer Weiterbildung wird vorgeschlagen, daß als Strom ein Gleichstrom verwendet wird. Ein Gleichstrom läßt sich mit besonders einfachen Mitteln kostengünstig realisieren, beispielsweise durch einen mit einer Versorgungsspannung verbundenen elektrischen Widerstand. Natürlich kann auch eine Konstantstromquelle vorgesehen sein, die geschaltet ist und nur dann einen Gleichstrom liefert, wenn der Halbleiterschalter ausgeschaltet ist. Auf diese Weise läßt sich Energie einsparen.

Vorzugsweise wird ein konstanter und/oder kontinuierlicher Gleichstrom verwendet. Ein konstanter Gleichstrom kann mit besonders einfachen Mitteln erzeugt werden, beispielsweise indem ein Widerstand mit einem konstanten elektrischen Potential verbunden wird. Eine weitere Vereinfachung kann dadurch erreicht werden, daß ein kontinuierlicher Gleichstrom verwendet wird. Dies erlaubt es, Schalt- und Koppelmittel einzusparen, die andernfalls erforderlich wären, um den Gleichstrom zu vorgebbaren Zeitpunkten beziehungsweise Zeiträumen einzuschalten beziehungsweise auszuschalten.

Darüber hinaus kann vorgesehen sein, daß die elektrische Spannung am Halbleiterschalter gemessen wird. Die Messung kann direkt an den Anschlüssen des Halbleiterschalters erfolgen, sie kann aber auch indirekt dadurch erfolgen, daß lediglich die Spannung einer Elektrode gegenüber einem mit einer Meßeinheit und dem Halbleiterschalter verbundenen gemeinsamen Bezugspotential ermittelt wird. Natürlich können auch abweichende Bezugspotentiale zugrundegelegt werden, wenn zwischen den beiden Bezugspotentialen eine Festspannungsbeziehung besteht. Beispielsweise kann das Bezugspotential für den Halbleiterschalter die positive Versorgungsspannung einer Energiequelle des Fahrzeugs sein, wohingegen die Messung an dem weiteren Anschluß des Halbleiterschalters erfolgt, wobei gegen Masse beziehungsweise ein negatives Bezugpotential der gleichen Energieversorgung gemessen wird. Die beiden Potentiale stehen über eine Fahrzeugbatterie in fester Beziehung zueinander, so daß das Meßergebnis trotzdem seine Aussagekraft beibehält.

Weiterhin wird vorgeschlagen, daß die gemessene elektrische Spannung mit einem Schwellwert verglichen wird. Dies erlaubt es, beispielsweise unter Zuhilfenahme eines Komparators ein Signal zu erzeugen, insbesondere ein Zustandssignal, welches seinen Wert in Abhängigkeit vom Unter- beziehungsweise Überschreiten des Schwellwerts durch die elektrische Spannung ändert. Auf diese Weise kann das Zustandssignal für Meldefunktionen verwendet werden. Durch eine geeignete Signalanpassung kann ferner das Signal zur direkten Verwendung durch eine Rechnereinheit vorgesehen sein.

Weiterhin wird vorgeschlagen, daß das Ergebnis des Vergleichs angezeigt wird. Auf diese Weise kann beispielsweise ein Fahrer des Zugs Informationen darüber erhalten, in welchem Zustand sich die Leuchtdiode befindet. Darüber hinaus können Störungszustände angezeigt werden, so daß der Fahrer bei nächster Gelegenheit die Störungen beseitigen lassen kann.

In einer vorteilhaften Weiterbildung wird vorgeschlagen, daß der Schwellwert eingestellt wird. Dies erlaubt es, das Verfahren an unterschiedliche technische Eigenschaften von verschiedenen Leuchtdioden mit geringem Aufwand anzupassen. Das Einstellen kann beispielsweise mittels entsprechender Einstellelemente wie Trimmpotentiometer oder dergleichen erfolgen. Natürlich kann auch eine automatische Einstellung vorgesehen sein, die den Typ der Leuchtdiode ermittelt und einen entsprechenden Schwellwert vorgibt.

Darüber hinaus kann vorgesehen sein, daß eine Temperatur gemessen wird. Vorzugsweise wird die Temperatur des Halbleiterschalters und/oder der Leuchtdiode ermittelt. Dies erlaubt es, die elektrischen Betriebsparameter bedarfsgerecht anzupassen, um eine Überlastbedingung weitgehend zu vermeiden. Die Zuverlässigkeit kann weiter verbessert werden.

Es wird weiterhin vorgeschlagen, daß ein Störungssignal der Leuchtdiode erfaßt und an eine übergeordnete Zugfahrzeugsteuerung übermittelt wird. Diese Ausgestaltung eignet sich insbesondere für Leuchtmittel, die eine eigene Störungsüberwachung enthalten und ein entsprechendes Signal aussenden. Die übergeordnete, zugfahrzeugseitige Steuerung kann dann das Signal erkennen und auswerten und eine entsprechende Meldung veranlassen. Auf diese Weise kann die Flexibilität des Anhängeranschlußgerätes und des Verfahrens weiterverbessert werden.

Weitere Vorteile und Merkmale der Erfindung sind der folgenden Beschreibung anhand einer Figur zu entnehmen. Diese Figur zeigt in schematischer Darstellung einen Ausschnitt eines elektronischen Prinzipschaltbilds eines Anhängeranschlußgeräts gemäß der Erfindung.

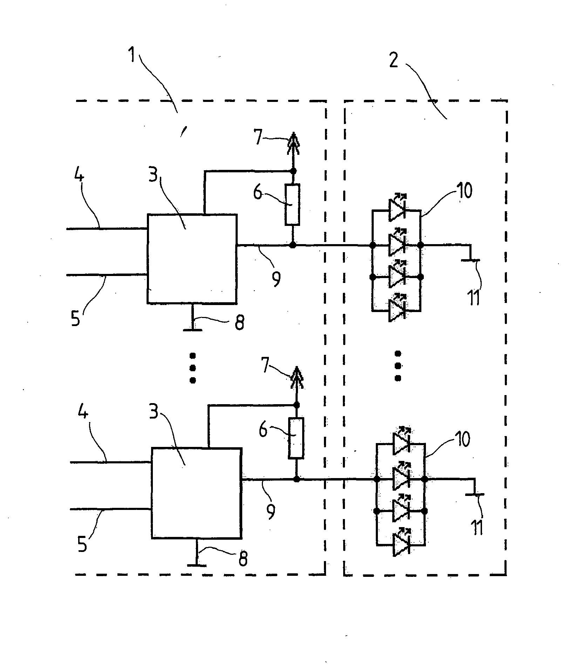

In der Figur ist schematisch ein Ausschnitt eines Anhängeranschlußgeräts 1 dargestellt, das zum Anschluß mehrerer Leuchtdioden-Anordnungen 10 einer Anhängerleuchte 2 vorgesehen ist. In der Figur sind lediglich zwei Kanäle mit zwei Leuchtdioden-Anordnungen 10 dargestellt. Das Anhängeranschlußgerät 1 umfaßt jedoch weitere entsprechende nicht dargestellte Kanäle für zusätzliche Leuchtdioden-Anordnungen 10. Die Figur ist auf das zur Beschreibung der Erfindung wesentliche reduziert.

Das Anhängeranschlußgerät 1 weist mehrere, entsprechend der Anzahl der anzusteuernden Leuchtdioden-Anordnungen 10 erforderliche Halbleiterschalterbaugruppen 3 auf, die ihrerseits nicht näher bezeichnete Halbleiterschalter aufweisen, die jeweils über einen Steuereingang 4 von einer nicht näher dargestellten Steuereinrichtung des Anhängeranschlußgeräts 1 ein- beziehungsweise ausgeschaltet werden können. Vorliegend ist der Halbleiterschalter durch einen MOSFET gebildet. Die Steuereinrichtung steht mit einem CAN-BUS des Zugfahrzeugs in kommunikationstechnischer Verbindung. Mit seinem Drain-Anschluß ist der MOSFET mit einem Anschluß 7 elektrisch leitend verbunden, der seinerseits mit einem nicht näher dargestellten Anschluß des Anhängeranschlußgerätes 1 an die positive Versorgungsspannung verbunden ist. Der Source-Anschluß des MOSFET ist auf die Steuerleitung 9 für die zugehörige Leuchtdioden-Anordnung 10 geschaltet. Durch ein entsprechendes Steuersignal auf der Steuerleitung 4 kann somit der nicht näher dargestellte MOSFET wie ein mechanischer Schalter ein- beziehungsweise ausgeschaltet werden, so daß eine elektrisch leitende Verbindung zwischen dem Anschluß 7 und der Steuerleitung 9 für die entsprechende Leuchtdioden-Anordnung 10 hergestellt werden kann. Die Halbleiterschalterbaugruppe 3 weist ferner einen Masseanschluß 8 auf, der mit einer Zugfahrzeugsmasse elektrisch leitend verbunden ist. Weiterhin ist eine Überwachungsleitung 5 vorgesehen, die ebenfalls mit der nicht näher dargestellten Steuereinrichtung des Anhängeranschlußgeräts 1 verbunden ist.

In der vorliegenden Ausgestaltung ist das Anhängeranschlußgerät 1 im nicht dargestellten Zugfahrzeug angeordnet. Die Steuerleitungen 9 sind vom Anhängeranschlußgerät 1 auf eine nicht näher bezeichnete elektrische Kupplung des Zugfahrzeugs geführt. Über einen ebenfalls nicht näher bezeichneten Stecker des Anhängers sind die Leuchtdioden-Anordnungen 10 elektrisch leitend mit den entsprechenden Steuerleitungen 9 verbunden, wenn der Stecker des Anhängers in die Zugfahrzeugkupplung eingesteckt ist. Über die Steckverbindung zwischen Zugfahrzeug und Anhänger wird eine Massekopplung hergestellt, die in der Figur ebenfalls nicht dargestellt ist.

Anhängerseitig sind die Leuchtdioden-Anordnungen 10 mit ihrem Anodenanschluß jeweils mit dem entsprechenden Anschluß des Anhängersteckers elektrisch leitend verbunden, so daß bei Bestehen einer Steckverbindung zwischen Zugfahrzeug und Anhänger die entsprechenden Steuerleitungen 9 kontaktiert werden. Kathodenseitig sind die Leuchtdioden-Anordnungen 10 mit einer Anhängermasse 11 elektrisch leitend verbunden.

Die Leuchtdioden-Anordnung 10 besteht vorliegend aus einer Anzahl parallelgeschalteter einzelner Leuchtdioden, im vorliegenden Fall jeweils vier. Natürlich sind auch andere Schaltungen denkbar, bei denen die Leuchtdioden in Reihe geschaltet sein können. Weiterhin kommen auch Matrixschaltungen in Frage, die sowohl parallelgeschaltete als auch seriellgeschaltete Leuchtdioden aufweisen.

Gemäß der Erfindung ist parallel zu dem MOSFET ein elektrischer Widerstand 6 geschaltet, so daß über den Widerstand 6 auch im ausgeschalteten Zustand des MOSFETs ein Strom von der positiven Versorgungsspannung in die Leuchtdioden-Anordnung 10 eingespeist wird. Auf diese Weise kann erreicht werden, daß auch im ausgeschalteten Zustand eine Überprüfung der bestimmungsgemäßen Funktion der Anhängerleuchte 2 erfolgen kann. Hierzu weist die Halbleiterschalterbaugruppe 3 eine nicht näher bezeichnete Spannungsmeßeinheit auf, die in der vorliegenden Ausgestaltung lediglich bei ausgeschaltetem MOSFET aktiv ist. Im ausgeschalteten Zustand fällt bei intakter Anhängeranschlußleuchte 2 sowie gekoppelter Steckverbindung zwischen Zugfahrzeug und Anhänger die elektrische Spannung im wesentlichen über dem MOSFET ab. Daran ändert sich auch nichts durch den Widerstand 6, über den aufgrund seines vergleichsweise hohen Widerstandswerts ein kleiner elektrischer Strom in die Steuerleitung 9 eingespeist wird. Der Strom ist derart gewählt, daß die Leuchtdioden-Anordnung 10 im wesentlichen kein sichtbares Licht erzeugt. In der vorliegenden Ausgestaltung stellt sich eine elektrische Spannung an den einzelnen Leuchtdioden der Lichtdioden-Anordnung 10 von etwa 1 V ein. Die Detektoreinheit detektiert nun einen großen Spannungsabfall über den MOSFET und erzeugt ein entsprechendes Zustandssignal. Über eine weitere nicht näher dargestellte Komparatoreinheit der Detektoreinheit wird das Zustandssignal mit einem vorgebbaren Schwellwert verglichen. Vorliegend ist der Schwellwert auf etwa 1,2 V eingestellt. Solange die Detektoreinheit eine Spannung unter 1,2 V mißt, wird vom Komparator ein Nullspannungs-Signal auf der Überwachungsleitung 5 ausgegeben und an die Steuereinrichtung übermittelt. Ist beispielsweise die Steckverbindung zwischen Zugfahrzeug und Anhänger gestört, insbesondere unterbrochen, so führt der durch den Widerstand 6 eingespeiste Strom zu einer Spannungserhöhung an der Steuerleitung 9, so daß über dem MOSFET die abfallende Spannung zusammenbricht. Hierbei wird der Spannungswert von 1,2 V des Komparators durch das Zustandssignal überschritten und ein entsprechendes Meldesignal auf die Überwachungsleitung 5 an die Steuereinrichtung ausgegeben. Vorliegend handelt es sich hierbei um eine elektrische Spannung von 5 V.

Ein vergleichbares Ausgangssignal kann erreicht werden, wenn anstelle einer defekten Verbindung zwischen Anhänger und Zugfahrzeug eine oder mehrere Leuchtdioden der Leuchtdiodenanordnung 10 durch Unterbrechung ausfallen. Hierdurch reduziert sich ebenfalls die am MOSFET anliegende Spannung, was mittels der Detektoreinheit detektiert und an die Steuereinrichtung übermittelt wird.

Die vorliegende Verwendung des Widerstands 6 ermöglicht nicht die Erfassung eines Kurzschlusses der Leuchtdiode. Der Kurzschluß wird vielmehr dadurch erfaßt, daß ein Stromfluß im MOSFET gemessen wird, wenn dieser ein Einschaltsignal über den Steuereingang 4 erhält. Eine nicht näher dargestellte Steuereinheit schaltet den MOSFET in diesem Fall sofort wieder aus, so daß es zu keiner Überlastung kommt. Zugleich wird ein entsprechendes Signal über die Überwachungsleitung 5 an die Steuereinrichtung übermittelt. In der vorliegenden Ausgestaltung ist vorgesehen, daß der MOSFET erst durch Rücksetzen der Steuereinrichtung wieder auf ein Einschaltsignal des Steuereingangs 4 reagiert. Gefährliche elektrische Zustände können vermieden werden.

In der vorliegenden Ausgestaltung ist ferner vorgesehen, daß die elektronische Schaltung inklusive der MOSFET's in einem Halbleiterchip integriert ist, so daß eine hohe Kompaktierung erreicht werden kann. Zur Reduzierung von Überlastzuständen ist der Chip mit einer Kühlfläche versehen, über die Verlustwärme abgeführt werden kann. Zusätzlich weist jeder Halbleiterschalter 3 eine Temperaturüberwachung auf, so daß eine thermische Überlastung vermieden werden kann.

Das in der Figur dargestellte Ausführungsbeispiel dient lediglich der Erläuterung der Erfindung und ist für diese nicht beschränkend. So können natürlich die verwendeten Halbleiterschalter und auch Leuchtdioden variieren, ohne den Gedanken der Erfindung zu verlassen.

### Bezugszeichenliste

- 1: Anhängeranschlußgerät
- 2: Anhängerleuchte
- 3: Halbleiterschalterbaugruppe
- 4: Steuereingang
- 5: Überwachungsleitung
- 6: Widerstand
- 7: Anschluß an positive Versorgungsspannung
- 8: Zugfahrzeugmasse
- 9: Steuerleitung für Anhängerleuchte
- 10: LED-Anordnung
- 11: Anhängermasse

## Patentansprüche

1. Anhängeranschlußgerät für einen Fahrzeugzug mit einem Zugfahrzeug und einem Anhänger, mit einem für eine Ansteuerung einer Leuchtdiode des Anhängers geeigneten Halbleiterschalter, der mittels einer Steuereinrichtung schaltbar ist, wobei die Steuereinrichtung mit einem steuereinrichtungenverbindenden Datennetz des Zugfahrzeugs in kommunikationstechnischer Verbindung steht,
**dadurch gekennzeichnet,**
**daß** dem Halbleiterschalter ein resistives Element elektrisch parallelgeschaltet ist.

2. Gerät nach Anspruch 1, **dadurch gekennzeichnet, daß** das resistive Element einstellbar ist.

3. Gerät nach Anspruch 1 oder 2, **dadurch gekennzeichnet, daß** das resistive Element einen elektrischen Widerstand und/oder eine Stromquelleneinheit aufweist.

4. Gerät nach Anspruch 3, **dadurch gekennzeichnet, daß** die Stromquelleneinheit eine Stromspiegeleinheit aufweist.

5. Gerät nach einem der Ansprüche 1 bis 4, **dadurch gekennzeichnet, daß** der Halbleiterschalter unipolar ausgebildet ist.

6. Gerät nach einem der Ansprüche 1 bis 5, **dadurch gekennzeichnet, daß** der Halbleiterschalter überlastfest ausgebildet ist.

7. Gerät nach einem der Ansprüche 1 bis 6, **dadurch gekennzeichnet, daß** der Halbleiterschalter durch einen Transistor gebildet ist.

8. Gerät nach einem der Ansprüche 1 bis 7, **gekennzeichnet durch** eine Detektoreinheit.

9. Gerät nach einem der Ansprüche 1 bis 8, **gekennzeichnet durch** einen Kommunikationsanschluß.

10. Gerät nach einem der Ansprüche 1 bis 9, **gekennzeichnet durch** einen Energieversorgungsanschluß.

11. Gerät nach Anspruch 9 und 10, **dadurch gekennzeichnet, daß** der Energieversorgungsanschluß und der Kommunikationsanschluß einstückig ausgebildet sind.

12. Verfahren zum Überwachen einer Leuchtdiode eines Anhängers, wobei die Leuchtdiode mit einem Anhängeranschlußgerät in elektrischer Verbindung steht und mittels eines Halbleiterschalters ein- und/oder ausgeschaltet wird, der von einer mit einem fahrzeugseitigen BUS in Kommunikationsverbindung stehenden Steuerung gesteuert wird, wobei in die Leuchtdiode zusätzlich ein Strom eingespeist wird.

13. Verfahren nach Anspruch 12, **dadurch gekennzeichnet, daß** als Strom ein Gleichstrom verwendet wird.

14. Verfahren nach Anspruch 12 oder 13, **dadurch gekennzeichnet, daß** die elektrische Spannung am Halbleiterschalter gemessen wird.

15. Verfahren nach einem der Ansprüche 12 bis 14, **dadurch gekennzeichnet, daß** ein Störungssignal der Leuchtdiode erfaßt und an eine übergeordnete Zugfahrzeugsteuerung übermittelt wird.
